## Europäisches Patentamt
## European Patent Office
## Office européen des brevets

(19)

(11) Veröffentlichungsnummer: **0 103 037**
**B1**

(12)

# EUROPÄISCHE PATENTSCHRIFT

(45) Veröffentlichungstag der Patentschrift:
14.01.87

(51) Int. Cl.⁴: **B 23 K 7/00**

(21) Anmeldenummer: 82108388.8

(22) Anmeldetag: 11.09.82

(54) Brennschneidmaschine.

(43) Veröffentlichungstag der Anmeldung:
21.03.84 Patentblatt 84/12

(45) Bekanntmachung des Hinweises auf die Patenterteilung:
14.01.87 Patentblatt 87/3

(84) Benannte Vertragsstaaten:
DE GB

(56) Entgegenhaltungen:
DE-A-2 459 410

(73) Patentinhaber: **AUTE Gesellschaft für autogene Technik mbH, Zollikerstrasse 228, CH- 8029 Zürich (CH)**

(72) Erfinder: **Lotz, Horst K., Robert- Bosch- Strasse 3, D-6238 Hofheim- Wallau (DE)**

(74) Vertreter: **Blumbach Weser Bergen Kramer Zwirner Hoffmann Patentanwälte, Radeckestrasse 43, D-8000 München 60 (DE)**

## Beschreibung

Die Erfindung bezieht sich auf eine Brennschneidmaschine zum Unterteilen von heißen und kalten Knüppeln, Block- und Brammensträngen in Stranggießanlagen während des Gießbetriebs, insbesondere bei langen Gießzeiten und damit erhöhter Wärmebeanspruchung, wobei die Brennschneidmaschine rundum einen von einem Kühlmittel durchflossenen Doppelmantel aufweist und die Lageraugen für die Wellen der Laufräder sowie Durchgangsrohre für nach außen gehende oder den Maschinenkörper durchdringende Maschinenteile in den Doppelmantel eingeschweißt sind wobei der Doppelmantel aus zwei im Abstand voneinander konzentrisch angeordnete Schalen besteht und wobei an den Stirnseiten Stirnverschlußplatten vorgesehen sind.

Eine solche Brennschneidmaschine ist durch die DE-A- 24 59 410 bekannt geworden.

Bei derartigen Maschinen besteht ein ständiges Bestreben, bei einem geringsten Wartungs- und Ersatzteilaufwand ein Höchstmaß an Funktions- und Betriebssicherheit zu gewährleisten so daß auch bei extremer Wärmebelastung verursachte Störzeiten wegfallen. Diese Ziele mit Mitteln zu erreichen, die dennoch eine kostengünstige Herstellung erlauben, gehört ebenfalls zum Ziel der vorliegenden Erfindung.

Zur Lösung dieser Aufgabenstellung schlägt die Erfindung grundlegend vor, daß die Schalen U-förmig ausgebildet sind, wobei die Schenkel der inneren Schale sich weiter nach oben als die Schenkel der äußeren Schale erstrecken und wobei von der Endkante der äußeren Schale ren Schale eine Längsverschlußplatte verläuft und Antriebswelle für das in der Brennschneidmaschine angeordnete Getriebe zur Bewegung des Brenners mit seinen Düsen in den Lageraugen durch entfernbare Spannringe befestigbar ist, um durch ein Lösen die Steckwellen des Getriebes zu entfernen wobei bei angehobener Deckelplatte die Antriebseinrichtungen der Brennschneidmaschine entfernbar sind und die Elemente für die Festlegung der Lagerschaleh und das Anziehen der Spannringe zugänglich sind, um diese Elemente zu lösen und die Welle herausziehbar zu machen.

Diese Doppelmantelkonstruktion, die hoch weitere Ausgestaltuhgen erfahreh kann, wie es in einigen Unteransprüchen gekennzeichnet ist, ermöglicht weitere vorteilhafte Ausbildungen der Brennschneidmaschine.

Um Antriebswellen und Getriebe einfach montieren, warten und austauschen zu können schlägt die Erfindung vor, daß die Antriebswellen für die in den Brennschneidmaschinen angeordneten Getriebe zur Bewegung der Brenner mit ihren Düsen in den Lageraugen durch entfernbare Spannringe befestigt sind, um durch ein Lösen die Steckwellen der Getriebe zu entfernen, wodurch die Antriebseinrichtungen der Brennschneidmaschine einzeln nach oben unter Abheben der Deckelplatte entfernbar sind. Dabei sind in vorteilhafter Weise bei abgehobener Deckelplatte die Elemente für die Festlegung der Lagerschalen und das Anziehen der Spannringe zugänglich, um diese Elemente zu lösen und die Welle herausziehbar zu machen.

Die erfindungsgemäße Ausbildung des Doppelmantels ermöglicht in einer vorteilhaften Weiterbildung, daß an dem Doppelmantel ein Schleppkettenturm angebracht ist und sich von diesem nach oben erstreckt, um die über die Brennschneidmaschine in einer Kabelwanne geführte Energiezuführkette mitzunehmen.

Dabei bewegt sich zweckmäßig der Schleppkettenturm neben der Kabelwanne parallel zu dieser und bewegt über einen sich seitlich erstreckenden Mitnehmerarm die Energiezuführungskette. Eine weitere Ausbildung der Erfindung besteht darin, daß an der durch den Doppelmantel führenden Hauptantriebswelle für die Brennschneidmaschine ein Impulsgeber angeordnet ist, der im Zusammenwirken mit einem Kantensteuerungshebel den Schneidvorgang steuert. Dabei ist zweckmäßig der Impulsgeber mit einer Vorwähleinrichtung versehen, um den Brennvorgang zu steuern im Anschluß an einen erfolgten Tastvorgang durch den Kantenabtasthebel. Eine weitere Ausbildung der erfindungsgemäßen Brennschneidmaschine besteht darin, daß an einer Stirnseite des Doppelmantels eine Schneidbrenndüse und eine dieser zugeordnete Bartbeseitigungsdüse angeordnet ist, die für die Brennschneiddüse auch die Zündflamme zur Verfügung stellt.

Eine zweckmäßige Weiterbildung der Erfindung besteht schließlich darin, daß dem Doppelmantel eine Haube zur Schalldämmung und/oder Rauchgassammlung zugeordnet ist.

Die Erfindung soll nachstehend anhand von Ausführungsbeispielen unter Bezugnahme auf die beigefügten Zeichnungen erläutert werden. In den Zeichnungen zeigen:

Fig. 1 eine Brennschneidmaschine mit dem erfindungsgemäßen Doppelmantel in perspektivischer Darstellung;

Fig. 1a eine seitliche Darstellung im Schnitt der Anordnung von Doppelschalen an den Stirnseiten;

Fig. 2 zwei nebeneinander angeordnete Brennschneidmaschinen mit Doppelmantel;

Fig. 3 eine Anordnung der Antriebswellen mit Getriebe im Doppelmantel in schematischer Darstellung;

Fig. 4 eine Weiterbildung der Brennschneidmaschine mit Schleppkettenturm;

Fig. 5 die Seitenansicht eines Schleppkettenturms nach Fig. 4;

Fig. 6 eine Impulsgeber-Impulszähl-Anordnung in vergrößertem Maßstab;

Fig. 7 die Ansicht der Stirnseite eines Doppelmantels mit Schneidbrenndüse und dieser zugeordneten Bartbeseitigungsdüse;

Fig. 8 eine am Aufklemmhebel für den Synchronlauf befestigte Haube;

Fig. 9 eine abgewandelte Ausführungsform einer Haube an einem wassergekühlten heb- und senkbaren Hebel;

Fig. 10 eine Haube mit einschwenkbar zangenartigen Anklemmnebeln und

Fig. 11 eine Frontansicht der Haube nach Fig. 10.

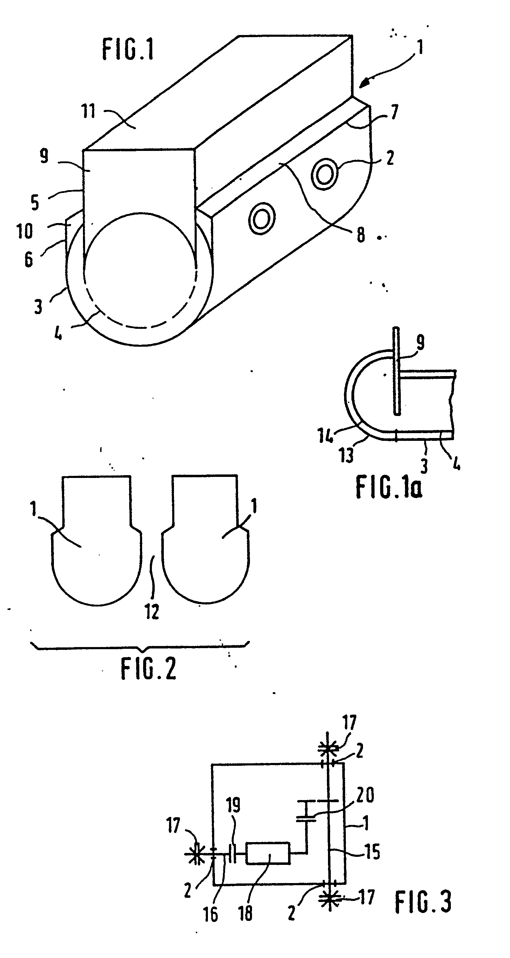

In Fig. 1 ist in perspektivischer Darstellung ein Doppelmantel 1 dargestellt, in dem sich die Aggregate der Brennschneidmaschine befinden, wobei der Doppelmantel rundum von einem Kühlmittel durchflossen wird. Auf diese Weise ist während des Gießbetriebs, insbesondere bei langen Gießzeiten und damit erhöhter Wärmebeanspruchung, eine genügende Kühle gewährleistet. Der Doppelmantel 1 ist mit Lageraugen 2 versehen, durch die die Wellen der Laufräder sowie Durchgangsrohre für nach außen gehende Maschinenteile eingeschweißt sind. Die Besonderheit des Doppelmantels 1 besteht darin, daß zwei im Abstand voneinander konzentrisch angeordnete, U-förmige Schalen 3 und 4 vorgesehen sind, wobei sich die Schenkel 5 der inneren Schale 4 weiter nach oben erstrecken als die Schenkel 6 der äußeren Schale 3. Von der Endkante 7 der äußeren Schale 3 erstreckt sich zur inneren Schale 4 eine Längsverschlußplatte 8, und die Stirnseiten sind durch Stirnverschlußplatten 9 und 10 abgeschlossen. Dabei kann vorgesehen sein, daß die beiden U-förmigen Schalen 3 und 4 auch an den Stirnseiten in Doppelschalen 13 und 14 auslaufen, die im Bereich der Stirnverschlußplatten 9 und 10 durch diese verschlossen sind, wie insbesondere Fig. 1a zeigt. Je nach den Erfordernissen können die Doppelschalen gewölbt oder eben ausgebildet sein und die stirnseitigen Doppelschalen 13 und 14 können auch halbkugelförmige Gestalt aufweisen. Die Schenkel 5 der inneren, U-förmigen Schale 4 und die Stirnverschlußplatten 9 enden vorzugsweise in einer Ebene und sind mit einer Deckelplatte 11 verbunden.

Die damit gewonnene Gestalt des Doppelmantels der Brennschneidmaschine ermöglicht, wie noch im einzelnen darzulegen sein wird, in günstigster Weise die Lösung von Montageproblemen und insbesondere bewirkt die Anordnung von mehreren Brenneraggregaten, die mit dem Doppelmantel 1 ausgestattet sind, eng nebeneinander, daß die Zwischenräume 12 sich nach oben erweitern, wie Fig. 2 zeigt. Auf diese Art und Weise wird eine Art Venturi-Effekt erzeugt, so daß ein erleichtertes Abströmen für die Gase von unten nach oben entsteht, wodurch die Kühlwirkung verbessert wird und insbesondere ein Wärmestau unterhalb der Brenneraggregate vermieden ist. Die schematische Darstellung in Fig. 3 zeigt, wie die Antriebswellen 15, 16 durch die bereits erwähnten Lageraugen 2 im Doppelmantel 1 nach außen geführt sind. Durch im einzelnen nur schematisch dargestellte Spannringanordnungen 17 kann ein Montieren oder Demontieren der zugeordneten Getriebe und sonstigen Antriebsaggregate im Doppelmantel 1 erfolgen. Die Spannringe 17 werden entfernt, um dadurch ein Lösen der Steckwellen 15, 16 zu ermöglichen, so daß nach dem Entfernen der Steckwellen 16 und 15 die Antriebseinrichtungen der Brennschneidmaschine nach oben unter Abheben der Deckelplatte 11 ausgebaut werden können. Auf diese Weise ist ohne Schwierigkeiten eine Wartung oder ein Austausch der Aggregate, sei er teilweise oder vollständig erforderlich, ohne Schwierigkeiten möglich. So ist insbesondere darauf geachtet, daß bei abgehobener Deckelplatte 11 die Elemente für die Festlegung der Lagerschalen und das Anziehen der Spannringe zugänglich sind, so daß beim Lösen der Elemente keine Schwierigkeiten auftreten. Insbesondere sind auch lösbare Kupplungen 19, 20 vorgesehen, um ohne Schwierigkeiten Maschinenteile, wie das Getriebe 18, aus dem Gehäuse entfernen zu können.

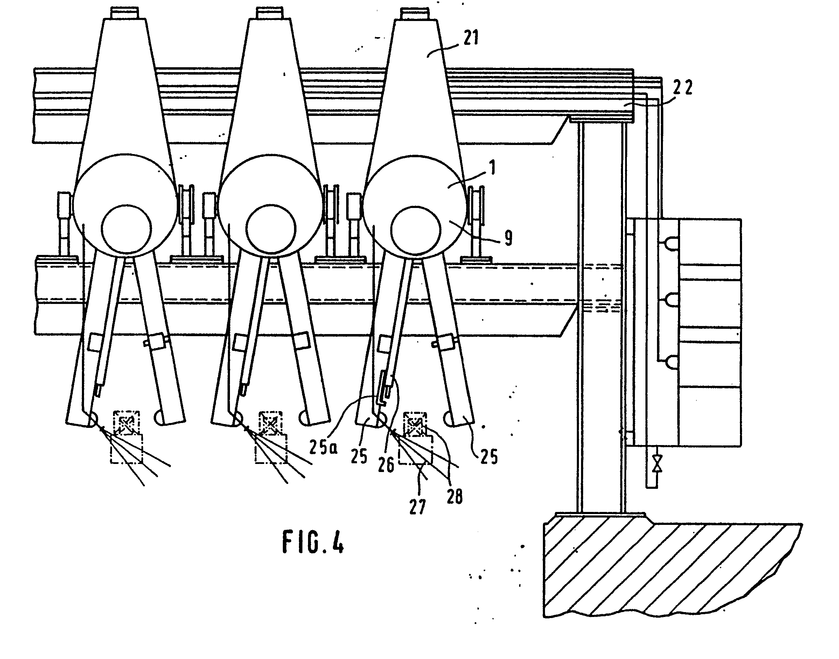

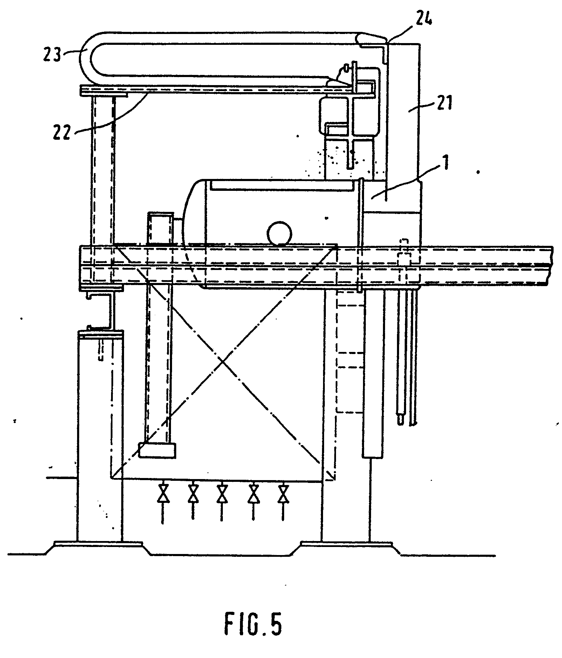

Die Vorteile der erfindungsgemäßen Ausgestaltung des Doppelmantels 1 kommt in der folgenden Weiterbildung auch darin zum Ausdruck, daß auf der Deckelplatte 11 oder direkt angeformt auf der äußeren, U-förmigen Schale 3 ein Schleppkettenturm 21 angebracht ist, wie es in Fig. 4 dargestellt ist. Der Schleppkettenturm 21 erstreckt sich vom Doppelmantel 1 nach oben, um die über der Brennschneidmaschine in einer Kabelwanne 22 geführte Energiezuführungskette 23 mitzunehmen. Wie insbesondere die Fig. 5 zeigt, ist der Schleppkettenturm 21 auf dem Doppelmantel 1 befestigt und kann sich neben der Kabelwanne 22 parallel zu dieser bewegen, wobei ein sich seitlich erstreckender Mitnehmerarm 24 an der Energiezuführungskette 23 befestigt ist, um diese mit dem Doppelmantel 1 der Brennschneidmaschine zu bewegen, wenn diese sich längs ihres Mitfahrwegs in Fig. 5 nach rechts bewegt.

Wie Fig. 4 zeigt, können mehrere Stränge und damit mehrere Brennschneidmaschinen mit ihrem Doppelmantel 1 und dem sich darauf befindlichen Schleppkettenturm 21 nebeneinander angeordnet werden. Fig. 4 zeigt eine derartige Nebeneinanderanordnung der Doppelmäntel 1 in schematischer Darstellung, aber die Anordnung kann - was die Ausgestaltung des Doppelmantels 1 und der sich damit ausbildende Zwischenraum 12 angeht - so ausgebildet sein, wie es in Fig. 2 dargestellt ist.

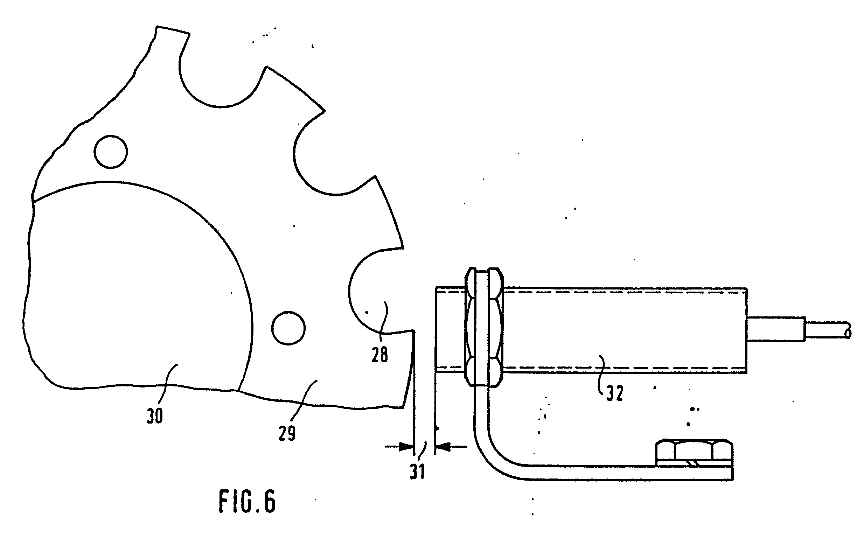

Wie Fig. 4 weiter in schematischer Darstellung zeigt, ist stirnseitig, vorzugsweise auf der Stirnverschlußplatte 9, neben dem Klemmhebelpaar 25 ein sonst nicht dargestellter Kantensteuerungshebel 25a mit Brenner 26 zugeordnet, der das auf dem Rollgang 27 befindliche Werkstück 28 zerschneidet. Die Montage des Brenners 26 erfolgt über eine Welle 17, die sich durch Lageraugen 2 des Doppelmantels 1 erstreckt, wie es bereits beschrieben wurde. Der Anordnung des Kantensteuerungshebels 25a mit Brenner 26 ist ein Impulsgeber zugeordnet. Wie im einzelnen aus Fig. 6 zu entnehmen ist, besteht der Impulsgeber aus einem Kerben 28 aufweisenden Rad 29, das auf der Welle 30 des Brenners 26 sitzt. In einem Abstand 31, der ca. 5 mm bewegt, ist ein Impulszähler 32 mit eingebauter Vorwähleinrichtung vorgesehen, um den Brennvorgang zu steuern im Anschluß an einen erfolgten Tastvorgang durch den Kantenabtasthebel 25a. Der auf den Impulsgeber 32 über das Kerbenrad 29 einwirkende Wellenteil 30 kann gegebenenfalls über ein nicht dargestelltes Getriebe mit einer im Vergleich zur Brennerantriebswelle erhöhten Drehzahl versehen werden.

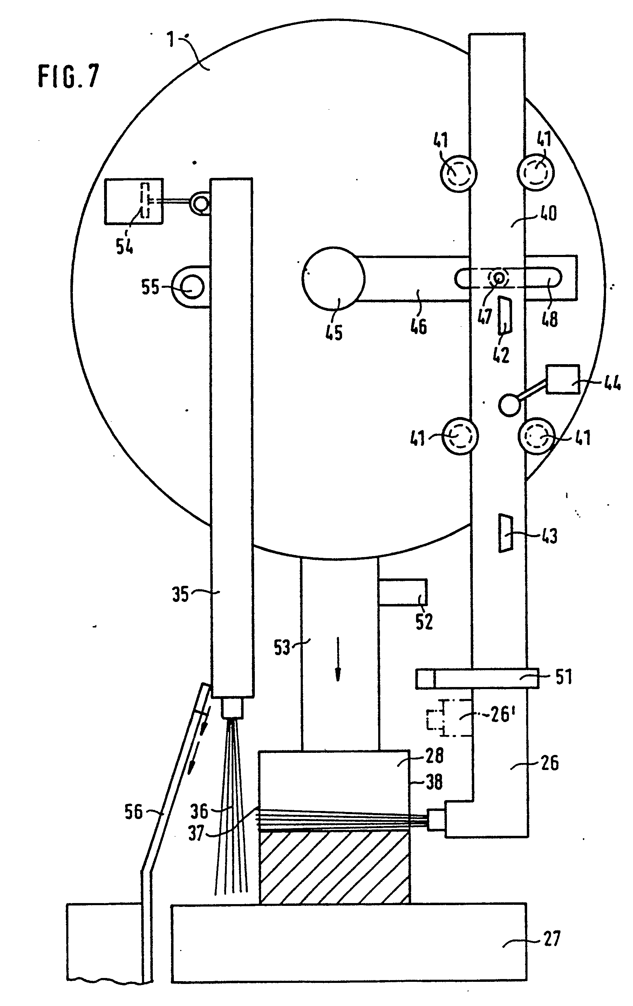

An der Stirnseite 9 des Doppelmantels 1 kann neben einer Schneidbrenndüse 26 dieser auch eine Bartbeseitigungsdüse 35 zugeordnet sein. Wie Fig. 7 zeigt, sendet die Bartbeseitigungsdüse 35 einen Strahl 36 längs der Seite 37 des Werkstücks 28, das sich auf dem Rollgang 27 befindet, welche der Angriffsseite 38 des Schneidbrenners 26 gegenüberliegt. Auf diese Weise wird die beim Schneidvorgang durch den Brenner 26 auf der Seite 37 auftretende Schlacke durch den Strahl 36 der Bartbeseitigungsdüse 35 nach unten weggeblasen. Auf dem Brennerschaft 40,der in Führungen 41 geführt ist, befindet sich ein oberer Nocken 42 und ein unterer Nocken 43, die mit einem Endschalter 44 zusammenwirken. Durch den Endschalter 44 wird die Brennerantriebswelle 45 betätigt, die über einen Antriebsarm 46 den Brennerschaft 40 betätigt, der über einen Bolzen 47, welcher sich in einem Langloch 48 des Antriebsarms 46 befindet, in einer Antriebsverbindung mit diesem steht. Mit Hilfe eines Abtastnockens 51, der auf dem Brennerschaft 40 angebracht ist und mit einem Anschlag 52 zusammenwirkt auf einem auf das Werkstück 28 absenkbaren Bolzen 53 angeordnet ist kann die gestrichelt dargestellte Ausgangslage 26' des Brenners 26 ermittelt werden. Befindet sich der Brenner 26 in der gestrichelt dargestellten Ausgangslage 26', wird die Bartbeseitigungsdüse mit Hilfe einer Zylinderkolbenanordnung 54 um die Welle 55 in Richtung auf den Brenner 26 verschwenkt, um diesen zu zünden. Anschließend schwenkt die Bartbeseitigungsdüse 35 in ihre in Fig. 7 dargestellte Lage zurück, um den Düsenstrom 36 an der Fläche 37 des Werkstücks 28 zur Bartbeseitigung auszusenden. Die Schlacken werden so zwischen dem Werkstück 28 und einem Prallblech 56 nach unten geblasen. In zweckmäßiger Weise erfolgt die Sauerstoffzuführung zur Schneiddüse 26 und Bartbeseitigungs- bzw. Zünddüse 35 durch eine nicht dargestellte Ringleitung. In vorteilhafter Weise ist vorgesehen, daß die Brennschneiddüse 26 und die Bartbeseitigungs- bzw. Zündflammdüse 35 ein gemeinsames Steuerorgan aufweisen, so daß die Bartbeseitigungsdüse 35 in Fig. 7 nach rechts verschwenkt wird, um als Zündflamme zu dienen, wenn die Schneidbrennerdüse 26 ihre Ausgangslage 26' einnimmt, während die Bartbeseitigungsdüse 35 automatisch in den in Fig. 7 dargestellte Lage zurückschwenkt, wenn der Zündvorgang erfolgt ist und der Schneidbrenner 26 den Schneidvorgang bei einer Abwärtsbewegung beginnt.

In ihrer weiteren Ausbildung kann die Bartbeseitigungsdüse 35 als Zwillingsdüse ausgebildet sein, um die Bärte an den beiden durch den Schnitt getrennten Teile des Werkstücks 26 zu entfernen.

Das Abweisblech 56, das auf der dem Werkstück 28 gegenüberliegenden Seite des Düsenstroms 36 der Bartbeseitigungsdüse 35 vorgesehen ist, kann als Teil einer Schalldämmhaube vorgesehen sein.

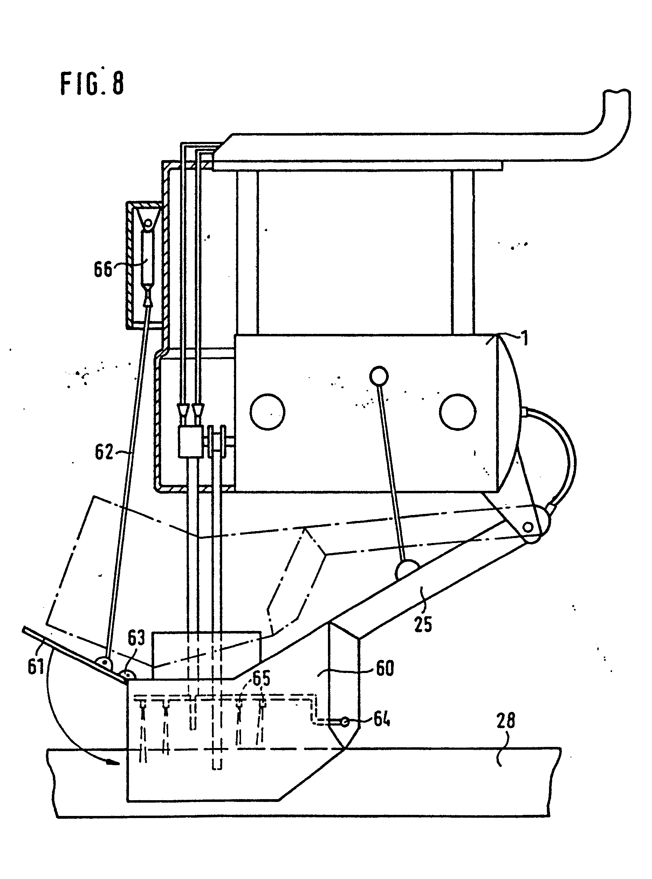

Wie Fig. 8 zeigt, ist an dem Aufklemmhebel 25 eine aus rostfreiem Material hergestellte Haube 60 befestigt. Die Haube 60 ist mit unbrennbaren Dämmstoffen verkleidet und mit einer nicht dargestellten Wasserbesprühung ausgestattet. Die Haube O dient zur Schalldämmung und/oder zur Rauchgassammlung. Da die Haube 60 an dem heb- und senkbaren Klemmhebel 25 befestigt ist, ist ein Synchronlauf sichergestellt, so daß im Schneidbetrieb der Brennbereich umschlossen ist. Zur Schneidkontrolle ist eine Sichtklappe 61 vorgesehen. Diese kann manuell, motorisch oder pneumatisch geöffnet werden durch einen Seilzug 62, der die in einem Gelenk 63 befestigte Sichtklappe 61 nach oben anhebt. Wird der Klemmhebel 25 gehoben, so wird die Haube 60 mit angehoben und nimmt die in Fig. 8 gestrichelt dargestellte Lage ein, in der das gesamte Werkstück 28 freigegeben ist. Eine Spritzwasserzuleitung 64 verteilt über Düsen 65 Spritzwasser längs der Haube um einer Beeinträchtigung durch zu starke Hitzeentwicklung entgegenzuwirken. Während bei der in Fig. 8 dargestellten Haube 60 die Sichtklappe 61 eine Frontöffnung freigibt, was bei Kabinen quer über den Strängen vorteilhaft ist, kann die Sichtklappe 61 auch seitlich angeordnet sein und dort ebenfalls über einen Seilzug 62 mit Positionszylinder 66 angehoben werden.

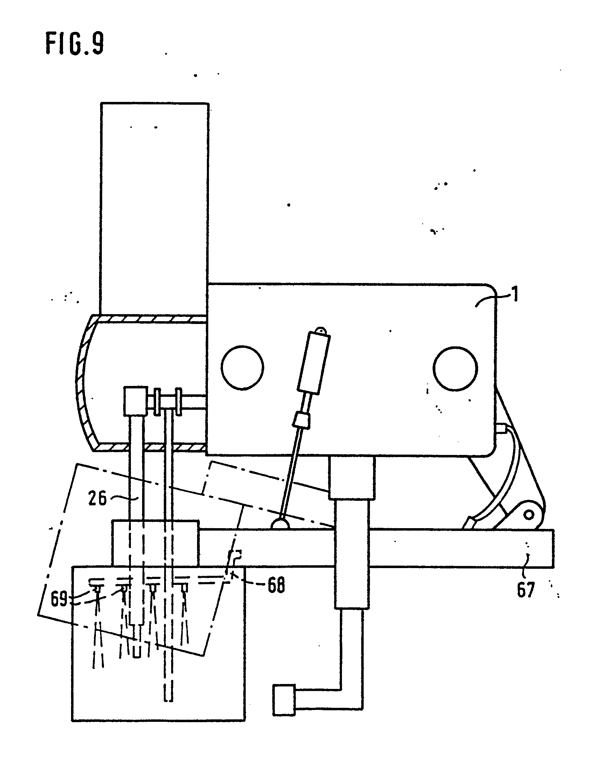

Steht ein heb- und senkbarer Aufklemmhebel nicht zur Verfügung, so ist es auch möglich, die Haube an einem gesonderten Hebel 67 anzubringen. Dieser Hebel ist an dem Doppelmantel 1 der Brennschneidmaschine befestigt und steht vorzugsweise mit deren Wasserkühlsystem in Verbindung. Auf diese Weise erfährt der Hebel 67 selbst eine Kühlung, und über eine entsprechende Zuleitung 68 mit Düse 69 wird auch hier die Haube 60 gekühlt. Eine derartige Haube ist in Fig. 9 dargestellt. Der Hebel 67 kann wieder mit Hilfe eines Seilzugs 62 (Fig.8) und einem Positionszylinder 66 angehoben werden, wobei sich der Hebel mit der Haube 60 in die in Fig. 9 gestrichelt dargestellte Stellung bewegt.

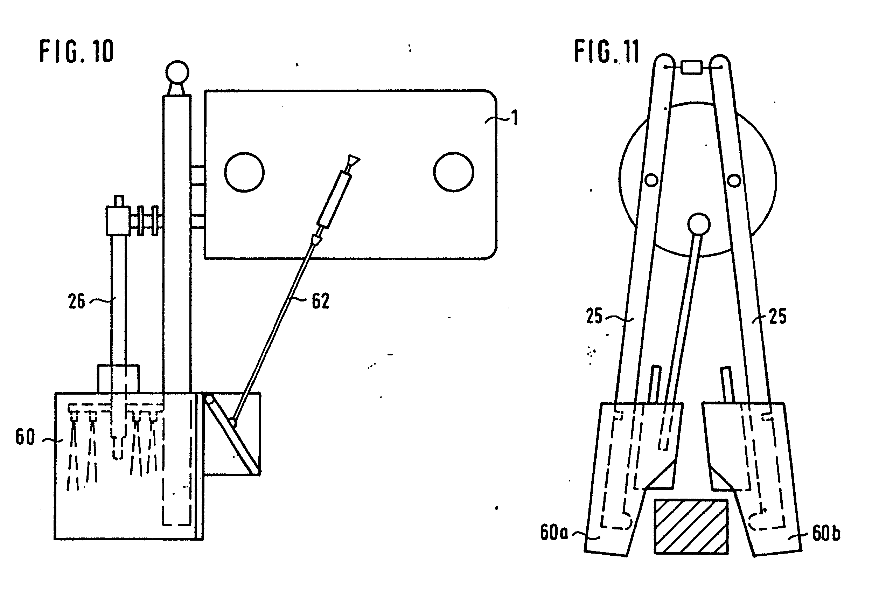

Eine weitere Ausführungsform besteht, wie Fig. 11 zeigt, darin, daß die Haube 60 zweigeteilt ist und die beiden Haubenteile 60a und 60b an den zangenartig wirkenden Klemmhebeln 25 befestigt ist. Wenn die Anklemmhebel für den Synchronlauf einschwenken, bilden die beiden Haubenteile 60a, 60b eine geschlossene Haube, die den Brennbereich umschließt. Auch hier können, wie Fig. 10 zu entnehmen ist, wie bei den vorangegangenen Ausführungsformen eine Wasserkühlung sowie eine Sichtklappe vorgesehen sein.

**Patentansprüche**

1. Brennschneidmaschine zum Unterteilen von heißen und kalten Knüppeln, Block- und Brammensträngen in Stranggießanlagen während des Gießbetriebs, insbesondere bei langen Gießzeiten, und damit erhöhter Wärmebeanspruchung wobei die Brennschneidmaschine rundum einen von einem Kühlmittel durchflossenen Doppelmantel (1) aufweist und die Lageraugen (2) für die Wellen (15, 16) der Laufräder sowie Durchgangsrohre für nach außen gehende oder den Maschinenkörper durchdringende Maschinenteile in den Doppelmantel (1) eingeschweißt sind, wobei der Doppelmantel (1) aus zwei im Abstand voneinander konzentrisch angeordneten Schalen (3, 4) besteht und wobei an den Stirnseiten Stirnverschlußplatten (9, 10) vorgesehen sind, dadurch gekennzeichnet, daß die Schalen (3, 4) U-förmig ausgebildet sind, wobei die Schenkel (5) der inneren Schale sich weiter nach oben als die Schenkel (6) der äußeren Schale (3) erstrecken und wobei von der Endkante (7) der äußeren Schale (3) zur inneren Schale (4) eine Längsverschlußplatte (8) verläuft und daß die Antriebswelle (15, 16) für das in der Brennschneidmaschine angeordnete Getriebe (18) zur Bewegung des Brenners (26) mit seinen Düsen in den Lageraugen (2) durch entfernbare Spannringe (17) befestigt ist, um durch ein Lösen die Steckwellen (15, 16) des Getriebes (18) zu entfernen, wobei bei angehobener Deckelplatte (11) die Antriebseinrichtungen der Brennschneidmaschine entfernbar sind und die Elemente für die Festlegung der Lagerschalen und das Anziehen der Spannringe (17) zugänglich sind um diese Elemente zu lösen und die Welle (15, 16) herausziehbar zu machen.

2. Brennschneidmaschine nach Anspruch 1, dadurch gekennzeichnet, daß die beiden U-förmigen Schalen (3 4) an den Stirnseiten in Doppelschalen (14, 15) auslaufen, die im Bereich der Stirnverschlußplatten (9, 10) durch diese verschlossen sind.

3. Brennschneidmaschine nach Anspruch 2, dadurch gekennzeichnet, daß die Doppelschalen (14, 15) gewölbt oder eben ausgebildet sind und daß gesonderte Stirnzusatzverschlußplatten (10) vorgesehen sind, die dié noch unverschlossenen Zwischenräume, gebildet von den beiden U-förmigen Schalen (3, 4), den stirnseiteigen Doppelschalen (14, 15) und den oberen Längsverschlußplatten (8) abdecken.

4. Brennschneidmaschine nach einem der Ansprüche 1 bis 3, dadurch gekennzeichnet, daß die Schenkel (5) der inneren, U-förmigen Schale (4) und die Stirnverschlußplatten (9) in einer Ebene aufhören und mit einer Deckelplatte (11) verbunden sind.

5. Brennschneidmaschine nach einem der Ansprüche 1 bis 4, dadurch gekennzeichnet, daß mehrere Brenneraggregate (1) eng nebeneinander angeordnet sind, wobei die Zwischenräume (12) sich nach oben erweitern und ein erleichtertes Abströmen für die von unten nach oben strömenden Gase entsteht.

6. Brennschneidmaschine nach einem der Ansprüche 1 bis 5, dadurch gekennzeichnet, daß nach abgehobenem Deckel (11) die im Aggregat vorgesehenen Kupplungen (19, 27) lösbar sind, um Maschinenteile aus dem Gehäuse zu entfernen.

7. Brennschneidmaschine nach einem der Ansprüche 1 bis 6, dadurch gekennzeichnet, daß am Doppelmantel ein Schleppkettenturm (21) angebracht ist und sich von diesem nach oben erstreckt, um die über der Brennschneidmaschine in einer Kabelwanne (22) geführte Energiezuführkette (23) mitzunehmen.

8. Brennschneidmaschine nach Anspruch 7, dadurch gekennzeichnet daß der Schleppkettenturm (21) sich neben der Kabelwanne (22) parallel zu dieser bewegt und über einen sich seitlich erstreckenden Mitnehmerarm (24) die Energiezuführungskette (23) bewegt.

9. Brennschneidmaschine nach einem der Ansprüche 1 bis 8 dadurch gekennzeichnet, daß an der Hauptantriebswelle für den Brenner (26) ein Impulsgeber (27) angeordnet ist, der im Zusammenwirken mit einem Kantensteuerungshebel (25a) den Schneidvorgang steuert.

10. Brennschneidmaschine nach Anspruch 9, dadurch gekennzeichnet, daß der Impulsgeber (32) mit einer Vorwähleinrichtung versehen ist, um den Brennvorgang zu steuern im Anschluß an einen erfolgten Tastvorgang durch den Kantenabtasthebel (25a).

11. Brennschneidmaschine nach Anspruch 9 oder 10, dadurch gekennzeichnet, daß der Impulsgeber (32) mit einem umlaufenden Wellenteil (30, 29) zusammenwirkt, das gegebenenfalls über ein Getriebe eine im Vergleich zur Brennerbetriebswelle erhöhte Drehzahl aufweist.

12. Brennschneidmaschine nach einem der Ansprüche 1 bis 11, dadurch gekennzeichnet, daß an einer Stirnseite des Doppelmantels (1) eine Schneidbrenndüse (26) und eine dieser zugeordnete Bartbeseitigungsdüse (35) angeordnet sind.

13. Brennschneidmaschine nach Anspruch 12, dadurch gekennzeichnet, daß die Schneidbrenndüse (26) einen auf ihrem Düsenschaft (40) montierten Nocken (51) aufweist der mit einem Anschlag (52) zusammenwirkt, um die Schneidbrenndüse (26) in der Ausgangslage (26') oberhalb des Werkstücks (28) zu positionieren.

14. Brennschneidmaschine nach Anspruch 12 oder 13 dadurch gekennzeichnet, daß die Bartbeseitigungsdüse (35) zum Zünden der Brennschneiddüse (26) dient und daß die Bartbesitigungsdüse (35) als Zündflamme zum sicheren Zünden mittels Pneumatik oder ähnlichem schwenkbar ist, um die Gasgemische im Bereich des Austritts des Schneidbrenners (26) zu zünden und nach dem Zurückschwenken als Bartbeseitigungsdüse (35) zu dienen.

15. Brennschneidmaschine nach einem der Ansprüche 12 bis 14, dadurch gekennzeichnet, daß die Sauerstoffzuführung zur Schneiddüse und Bartbeseitigungs- bzw. Zünddüse durch eine Ringleitung erfolgt.

16. Brennschneidmaschine nach einem der Ansprüche 12 bis 15, dadurch gekennzeichnet, daß die Brennschneiddüse und die Bartbeseitigungs- bzw. Zündflammendüse ein gemeinsames Steuerorgan aufweisen.

17. Brennschneidmaschine nach einem der Ansprüche 12 bis 16, dadurch gekennzeichnet daß die Bartbeseitigungsdüse (35) als Zwillingsdüse für die beiden durch den Schnitt getrennten Werkstückteile (28) ausgebildet ist.

18. Brennschneidmaschine nach einem der Ansprüche 12 bis 17, dadurch gekennzeichnet daß auf der dem Werkstück (28) gegenüberliegenden Seite der Bartbeseitigungsdüse (35) ein Abweisblech (56) vorgesehen ist, das gegebenenfalls Teil einer Schalldämmhaube ist.

19. Brennschneidmaschine nach einem der Ansprüche 1 bis 18, dadurch gekennzeichnet daß eine aus rostfreiem Material hergestellte und mit unbrennbaren Dämmstoffen beplankte, gegebenenfalls mit Wassersprühung ausgestattete Haube zur Schalldämmung und/oder zur Rauchgassammlung heb- und senkbar am Aufklemmhebel für den Synchronlauf befestigt ist, im Schneidbetrieb den Brennbereich umschließt und zur Schneidkontrolle mit einer manuell, motorisch oder pneumatisch zu öffnenden Sichtklappe versehen ist.

20. Brennschneidmaschine nach Anspruch 19, dadurch gekennzeichnet daß die Haube an einem wassergekühlten heb- und senkbaren Hebel befestigt ist.

21. Brennschneidmaschine nach Anspruch 19 oder 20, dadurch gekennzeichnet daß die Haube zweiteilig ausgebildet ist und einschwenkbar an den zangenartigen Anklemmhebeln für den Synchronlauf befestigt ist.

**Claims**

1. A flame cutting machine for subdividing hot and cold billets and ingot and slab bars in continuous casting plants during casting, more particularly in the case of long casting times and, therefore, increased heat stressing, the machine having around it a double jacket (1) flowed through by a coolant, bearing lugs or the like (2) for the shafts (15, 16) of the rotors and lead-through tubes for machine parts which extend to the outside or through the machine body being welded into the double jacket (1), the same comprising two spaced-apart concentric shells (3, 4), end closure plates (9, 10) being provided on the end faces, characterised in that the shells (3, 4) are U-shaped, the arms (5) of the inner shell extending higher than the arms (6) of the outer shell (3), a longitudinal closure plate (8) extending from the end edge (7) of the outer shell (3) to the inner shell (4); and the input shaft (15, 16) for the gearbox (18) disposed in the machine and serving to move the burner (6) has its nozzles secured in the bearing eyes (2) by removable clamping rings (17), for removal of the stub shafts (15, 16) of the gearbox (18) by a release, the drive means for the machine being removable with the cover plate (11) raised, the elements for securing the bearer shells and tightening the clamping rings (17) being accessible for the release of such elements and for withdrawal of the shaft (15, 16).

2. A machine according to claim 1, characterised in that the two U-shaped shells (3, 4) run out on the end faces in double shells (14, 15) closed by the end closure plates (9, 10) near the same.

3. A machine according to claim 2, characterised in that the double shells (14, 15) are curved or plane and special end additional closure plates (10) are provided which cover the still unclosed gaps bounded by the two U-shaped shells (3, 4), the end-face double shells (14, 15) and the top longitudinal closure plates (8).

4. A machine according to any of claims 1 - 3, characterised in that the arms (5) of the inner U-shaped shell (4) and the end closure plates (9) terminate in one plane and are connected to a cover plate (11).

5. A machine according to any of claims 1 - 4, characterised in that a number of burner units are disposed closely adjacent one another, the gaps (12) widening upwardly and facilitating the discharge of the upwardly flowing gases.

6. A machine according to any of claims 1 to 5, characterised in that after the cover (11) has been raised the couplings (19, 27) in the unit can be released for the removal of parts of the machine from the casing.

7. A machine according to any of claims 1 - 6, characterised in that a drag chain tower (21) is disposed on the double jacket and extends upwardly therefrom in order to entrain the energy-supplying chain (23) guided above the machine in a cable trough (22).

8. A machine according to claim 7, characterised in that the tower (21) moves adjacent and parallel to the trough (22) and is moved by way of a laterally extending entraining arm (24) of the chain (23).

9. A machine according to any of claims 1 - 8, characterised in that a pulse sender (27) is disposed on the main drive shaft for the burner (26) and co-operates with an edge-controlling lever (25a) to control cutting.

10. A machine according to claim 9, characterised in that the pulse sender (32) has a preselector for controlling burning in association with sensing by the edge-sensing lever (25a).

11. A machine according to claim 9 or 10, characterised in that the pulse sender (32) co-operates with a rotating shaft part (30, 29) which, possibly through the agency of a transmission, runs faster than the burner-operated shaft.

12. A machine according to any of claims 1 - 11, characterised in that a flame-cutting nozzle (26) and a deburring nozzle (35) associated therewith are disposed on an endface of the double jacket (1).

13. A machine according to claim 12, characterised in that the nozzle (26) has disposed on its shank or the like (40) a cam (51) which cooperates with an abutment (52) to locate the nozzle (26) in its initial position (26') above the workpiece (28).

14. A machine according to claim 12 or 13, characterised in that the deburring nozzle (35) is operative to ignite the cutting nozzle (26) and is pivotable as igniting flame for reliable ignition by means of pneumatic or similar means in order to ignite the gas mixtures near the exit of the burner (26) and, after pivoting back, to be operative as a deburring nozzle (35).

15. A machine according to any of claims 12 - 14, characterised in that the oxygen feed to the cutting nozzle and deburring or igniting nozzle is by way of a ring main.

16. A machine according to any of claims 12 - 15, characterised in that the cutting nozzle and the deburring or igniting nozzle have a common control element. -

17. A machine according to any of claims 12 - 16, characterised in that the deburring nozzle (35) is a twin nozzle for the two workpiece parts (28) separated by the cut.

18. A machine according to any of claims 12 - 17, characterised in that a deflector plate (57) which may be part of a sound-damping hood is disposed on that side of the deburring nozzle (35) which is opposite the workpiece (28).

19. A machine according to any of claims 1 - 18, characterised in that a non-rusting hood operative to damp sound and/or collect flue gas is secured for vertical movement to the clamping lever for synchronous operation, is sheeted in inflammable insulating substances and possibly having water-spraying provision, extends around the burning zone during cutting and has for the supervision thereof a viewing flap openable manually or by motor or pneumatic means.

20. A machine according to claim 19, characterised in that the hood is secured to a water-cooled vertically movable lever.

21. A machine according to claim 19 or 20, characterised in that the hood is in two parts and is so secured to the tongs-like clamping levers for synchronous operation as to be pivotable inwards.

**Revendications**

1) Machine d'oxycoupage pour découper des billettes, lingots et brames chauds et froids dans des installations de coulée continue pendant la coulée, notamment en cas de coulée de longue durée et par conséquent sous contrainte thermique élevée, la machine d'oxycoupage présentant tout autour une enveloppe double (1) dans laquelle circule un agent de refroidissement, et les coussinets à oeil (2) pour les arbres (15, 16) des roues de roulement ainsi que des tubes de passage pour des parties de la machine sortant à l'extérieur ou traversant le corps de machine étant soudés dans l'enveloppe double (1), l'enveloppe double (1) étant constituée par deux coques (3, 4) disposées concentriquement à une certaine distance l'une de l'autre, et des plaques de fermeture frontales (9, 10) étant prévues sur les côtés frontaux, caractérisée en ce que les coques (3, 4) sont en forme d'U, les ailes (5) de la coque intérieure s'étendant vers le haut plus loin que les ailes (6) de la coque extérieure (3), et une plaque de fermeture longitudinale (8) s'étendant du bord terminal (7) de la coque (3) extérieure jusqu'à la coque (4) intérieure, et que l'arbre moteur (15, 16) pour le train d'engrenages (18) disposé dans la machine d'oxycoupage pour le mouvement du chalumeau coupeur (26) est fixé avec ses buses dans les coussinets à oeil (2) par des colliers de serrage (17) amovibles pour enlever par desserrage les arbres (15, 16) du train d'entraînement (18), et lorsque le couvercle (11) est soulevé, les dispositifs d'entraînement de la machine d'oxycoupage peuvent être enlevés et les éléments pour la fixation des paliers et le serrage des colliers de serrage (17) sont accessibles afin de desserrer ces éléments et permettre de retirer l'arbre (15, 16).

2) Machine d'oxycoupage selon la revendication 1, caractérisée en ce que les deux coques (3, 4) en forme d'U se terminent aux côtés frontaux en doubles coques (14, 15) qui, dans la zone des plaques de fermeture frontales (9, 10), sont fermées par ces dernières.

3) Machine d'oxycoupage selon la revendication 2, caractérisée en ce que les doubles coques (14, 15) sont bombées ou planes et qu'il est prévu des plaques supplémentaires de fermeture frontale (10) qui recouvrent les intervalles non fermés formés par les deux coques (3, 4) en U, les doubles coques (14, 15) frontales et les plaques de fermeture longitudinales (8) supérieures.

4) Machine d'oxycoupage selon une quelconque des revendications 1 à 3, caractérisée en ce que les ailes (5) de la coque (4) en forme d'U intérieure et les plaques de fermeture frontales (9) se terminent dans un même plan et sont reliées à une plaque de couvercle (11).

5) Machine d'oxycoupage selon une quelconque des revendications 1 à 4, caractérisée en ce que plusieurs agrégats d'oxycoupage sont étroitement juxtaposés, les intervalles (12) allant en s'élargissant vers le haut ce qui facilite l'écoulement des gaz s'écoulant de bas en haut.

6) Machine d'oxycoupage selon une quelconque des revendications 1 à 5, caractérisée en ce que, après que le couvercle (11) a été soulevé, les accouplements (19, 27) prévus dans l'agrégat peuvent être désassemblés pour sortir des éléments de la machine hors du corps de dispositif.

7) Machine d'oxycoupage selon une quelconque des revendications 1 à 6, caractérisée en ce qu'est disposée sur l'enveloppe double une tour à chaîne d'entraînement 21 qui s'étend vers le haut à partir de cette enveloppe afin d'entraîner la chaîne d'apport d'énergie 23 passant au-dessus de la machine d'oxycoupage dans une goulotte à câble (22).

8) Machine d'oxycoupage selon la revendication 7, caractérisée en ce que la tour à chaîne d'entraînement (21) se déplace à côté de la goulotte à câble (22) parallèlement à celle-ci et déplace la chaîne de conduction d'énergie (23) par l'intermédiaire d'un bras d'entraînement (24) s'étendant latéralement.

9) Machine d'oxycoupage selon une quelconque des revendications 1 à 8, caractérisée en ce que, sur l'arbre d'entraînement principal pour le chalumeau coupeur 26, il est disposé un émetteur d'impulsions (27) qui, en collaboration avec un levier d'exploration d'aréte (25a), commande le processus d'oxycoupage.

10) Machine d'oxycoupage selon la revendication 9, caractérisée en ce que l'émetteur d'impulsions (32) est doté d'un dispositif de présélection afin de commander l'opération d'oxycoupage à la suite d'une opération d'exploration effectuée par le levier d'exploration d'arête (25a).

11) Machine d'oxycoupage selon la revendication 9 ou 10, caractérisée en ce que l'émetteur d'impulsions (32) coopère avec une partie d'arbre (30, 29) rotative qui, éventuellement par l'intermédiaire d'un train d'engrenages, présente une vitesse de rotation supérieure à celle de l'arbre de chalumeau de coupage.

12) Machine d'oxycoupage selon une quelconque des revendications 1 à 11, caractérisée en ce que, sur un côté frontal de l'enveloppe double (1) sont disposées une buse de chalumeau coupeur (26) et une buse d'ébarbage (35) associée à cette dernière.

13) Machine d'oxycoupage selon la revendication 12, caractérisée en ce que la buse d'oxycoupage (26) comporte un ergot (51) monté sur sa tige de buse (40) qui coopère avec une butée (52) afin de positionner la buse d'oxycoupage (26) dans la position de départ (26') au-dessus de la pièce (28).

14) Machine d'oxycoupage selon la revendication 12 ou 13, caractérisée en ce que la buse d'ébarbage (35) sert à allumer la buse d'oxycoupage (26) et que la buse d'ébarbage (35) utilisée comme flamme d'allumage pour assurer l'allumage peut pivoter au moyen d'un dispositif pneumatique ou analogue afin d'allumer les mélanges gazeux dans la zone de sortie du chalumeau coupeur (26) et, après être revenue en pivotant dans sa position initiale, de servir de buse d'ébarbage (35).

15) Machine d'oxycoupage selon une quelconque des revendications 12 à 14, caractérisée en ce que l'arrivée d'oxygène à la buse d'oxycoupage et à la buse d'ébarbage ou d'allumage s'effectue par une conduite circulaire.

16) Machine d'oxycoupage selon une quelconque des revendications 12 à 15, caractérisée en ce que la buse d'oxycoupage et la buse d'ébarbage et d'allumage possèdent un organe de commande commun.

17) Machine d'oxycoupage selon une quelconque des revendications 12 à 17, caractérisée en ce que la buse d'ébarbage (35) se présente sous la forme d'une buse géminée pour les deux morceaux de pièce 28 séparés par la coupe.

18) Machine d'oxycoupage selon une quelconque des revendications 12 à 17, caractérisée en ce qu'il est prévu sur le côté de la buse d'ébarbage (35) situé à l'opposé de la pièce (28) une tôle deflectrice (56) qui est éventuellement une partie d'un capot d'insonorisation.

19) Machine d'oxycoupage selon une quelconque des revendications 1 à 18, caractérisée en ce qu'un capot destiné à l'insonorisation et/ou au recueil des gaz de fumée, fait en matériau inoxydable et recouvert de matériaux isolants incombustibles, éventuellement équipé d'un dispositif de pulvérisation d'eau, est fixé, de façon à pouvoir se soulever et s'abaisser au levier de serrage pour la marche synchrone, entoure la zone du chalumeau pendant l'opération d'oxycoupage, et, pour permettre le contrôle de la coupe, est pourvu d'un volet d'observation qui peut être ouvert à la main, au moyen d'un moteur ou par un dispositif pneumatique.

20) Machine d'oxycoupage selon la revendication 19, caractérisée en ce que le capot est fixé à un levier refroidi par eau, pouvant se soulever et s'abaisser.

21) Machine d'oxycoupage selon la revendication 19 ou 20 caractérisée en ce que le capot est en deux parties et est fixé pivotant aux leviers de serrage en forme de pince pour la marche synchrone.

FIG.1

11
9
5
10
6
3
4

7
2
8
1

FIG.1a

9
14
13
3
4

FIG.2

1
1
12

FIG.3

17
2
19
17
2
16
18
2
20
1
15
17
17

FIG.4

0 103 037

FIG.5

FIG.6

28

30

29

31

32

0 103 037

FIG.7

FIG. 8

FIG.9

FIG. 11

25

25

60b

60a

FIG. 10

1

62

26

60

15